# EUROPEAN PATENT SPECIFICATION

(11) **EP 1 922 199 B1**
(45) Date of publication and mention of the grant of the patent: **22.06.2011**
(21) Application number: 06765205.7
(22) Date of filing: 03.08.2006
(51) Int. Cl.: B29C 44/44, B29C 44/08, B29C 44/56

(54) **MOULDING PROCESS**
FORMVERFAHREN
PROCÉDÉ DE MOULAGE

(30) Priority: 03.08.2005 GB 0515986
(43) Date of publication of application: 21.05.2008
(73) Proprietor: SCA Packaging Limited, Aylesford, Kent ME20 7TW (GB)
(72) Inventor: GODDARD, Robin Richard, Northants NN15 7BP (GB)
(74) Representative: Leckey, David Herbert
(86) International application number: PCT/GB2006/002901
(87) International publication number: WO 2007/015099

(56) References cited:
- EP-A- 1 491 313
- DE-A1- 19 619 892
- DE-C1- 3 743 318
- FR-A1- 2 812 234
- JP-A- 54 046 269

## Description

The present invention relates to a moulding process and in particular to a moulding process for forming an expanded foam body having a surface layer or skin, according to the preamble of claim 1. DE-A-19619892 describes such method

To produce an expanded foam body, beads of an expandable and fusible plastic material are usually introduced into a mould into which steam or other medium is introduced in order to expand and fuse the pellets into a coherent expanded foam body. Typically, steam is introduced into a mould to heat the beads (e.g. of styrene) through glass transition into a plastic state. This allows a propellant gas, typically pentane, contained within the bead to further expand the beads within the mould. The pressure created within the mould by the expansion of the beads and the increased temperature fuses the beads into a coherent mass

It is frequently desirable to provide such a body with a skin or surface layer for aesthetic or technical reasons. It has not proven possible to date to satisfactorily provide such a surface layer on the body during its formation in a mould, since the expanding/ fusing medium, is normally introduced to the mould from all sides to ensure even treatment of the beads in the mould. This means that any surface layer forming material placed on a face of the mould cavity will obstruct the steam, leading to incomplete fusing of the beads to each other and to the surface layer forming material.

In an alternative proposed process both components are made separately and are joined adhesively afterwards. However, both such processes are costly and also present tolerance problems in view of the different natures of the two materials being used.

The present invention seeks to overcome the above problems and from a first aspect provides a method of forming an expanded foam body, according to claim 1.

The surface layer forming material is formed as a non woven fibre sheet. It has been found that such materials fuse very effectively to the foamed body. This is thought to be due to the fact that the fusing medium is able very easily to pass through the material, allowing complete fusion of the foam beads and further melting the layer to adhere it to the foamed body.

The diameter and length of the fibres used in the non-woven material may be chosen to give a desired effect or surface property. A preferred embodiment uses 10 denier, 64 millimetre long fibres suitably batted into a non-woven layer by standard processes which will be well known to the person skilled in the non-woven art.

The porosity of the skin forming layer needed to produce a desired effect can be determined empirically. However, in the preferred embodiments of the invention, the porosity should preferably be such as to provide a restriction of flow of the fusing medium of not more than 30%. This has been found to allow for appropriate proper passage of fusing media such as air and wet steam.

The thickness of the surface forming sheet used can be chosen to give a desired surface layer thickness. For example, a thicker sheet may give improved compressive or tensile strength, penetration resistance, or moisture resistance, for example. Typically material thickness is defined in terms of weight per unit area, and in the preferred embodiments of the invention, the sheet has a weight per unit area from 90 g/m² (grams per square meter) upwards, for example 150 g/m². An upper limit of 200 g/m² may be envisaged for certain applications.

The surface layer forming material may be of any suitable chemical composition. The composition may be determined by the foamed material to which the layer is adhered and/or by the purpose or desired physical properties of the surface layer. Typically the underlying foamed material will be of expanded polystyrene, expanded polypropylene, their derivatives and/or mixtures thereof. Suitable materials may, therefore, be polypropylene and polystyrene, or mixtures thereof. A bi-filament composition having approximately 50% polypropylene and 50% polystyrene has been found to give satisfactory bonding to both expanded polystyrene and expanded polypropylene substrates.

The strength of bonding of the surface layer to the foamed body, and also the visual appearance of the surface layer, can be controlled by controlling the pressure, temperature and time of application of the fusing medium. For example, in a relatively low pressure, temperature or short time period the surface finish may still remain fibrous since the fibres of the layer do not have a chance fully to melt and fuse to the substrate. However, at higher temperatures, pressure and times the surface layer can melt entirely so as to fuse onto the substrate forming below, giving a homogenous finish. The particular process parameters can, therefore, be controlled to give the desired effect.

An extremely important advantage of the present invention is that it can be carried out on standard expanded foam moulding equipment without modification, as the porosity of the surface forming layer allows the fusing medium, e.g. steam, to pass through the layer to allow expansion and fusion of the body to occur as in a normal procedure.

In a preferred process, the surface layer forming sheet is first located in a mould, for example against a desired surface region of a mould cavity. In a first embodiment, the sheet may be positioned in the mould by a positioning tool e.g. a shuttle tool, which enters the mould, drawing the sheet with it The positioning tool may then be removed, and the mould filled with expandable foam material. Steam or some other fusing medium is then introduced into the mould so as to expand and fuse the expandable material and fuse the surface forming material to the foamed body. Even though the sheet may have been stretched or pleated locally during the positioning step, the final fusing of the layer to the foamed body has been found to even out any local anomalies which may have occurred in the surface layer during positioning.

In an alternative embodiment, a partially fused and expanded body may first be formed in the mould, the mould opened and the partially fused and expanded body withdrawn from the mould cavity. The surface layer forming sheet can then by positioned in the mould cavity by the partially fused and expanded body as it is reinserted into the mould cavity.

In certain cases, for example where the expanded foam body is to be completely covered by a surface layer, it may be desirable or necessary to apply the surface layer in more than one step. In some embodiments, therefore, the mould may be opened after at least partially fusing the body and a first section of the surface layer forming material together so as to allow a second section of surface forming material to be suitably positioned in the mould. The mould is then reclosed and the fusion process completed. The mould can then be opened and the fused body, with its bonded surface layer, removed.

It will be appreciated that the invention also expends to a product formed in accordance with the process of the invention, and to apparatus for carrying out the method of the invention.

Two preferred embodiments of the invention will now be described with reference to the accompanying drawings in which:
Figures 1A to 1G show stages in a first process in accordance with the invention; and
Figures 2A to 2G show stages in a second embodiment of the invention.

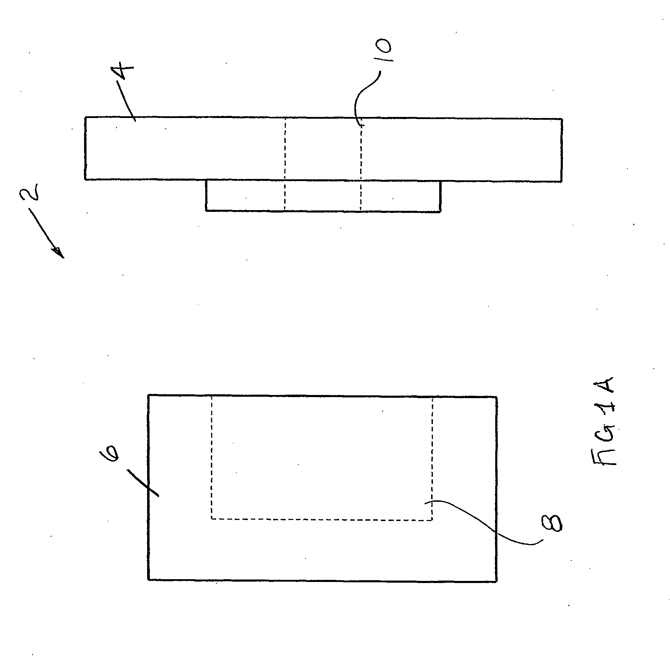

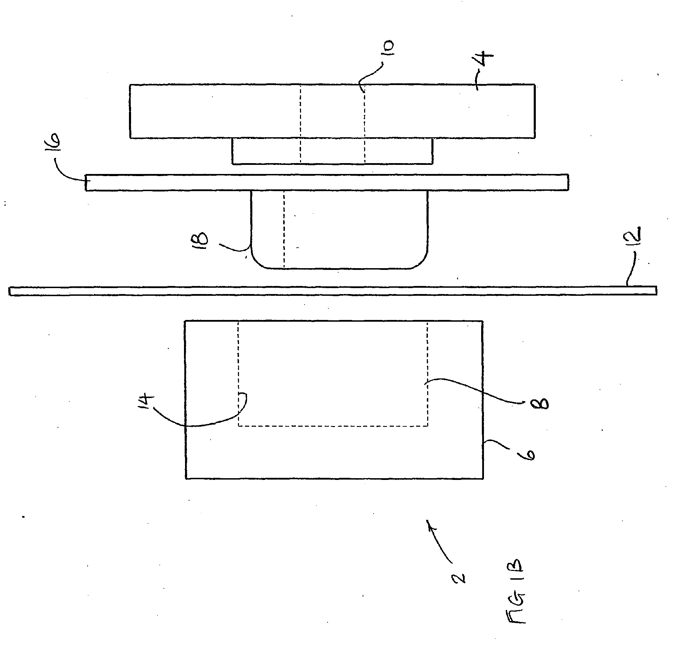

Referring firstly to Figures 1A to 1G, there is shown a mould tool 2 having a male tool part 4 and a female tool part 6. When assembled together the mould parts define a mould cavity 8 which is filled with expandable material e.g. polypropylene or polystyrene beads through a filler opening 10 provided in the male part 4.

The expanded foam body to be produced in the mould 2 is also to be provided with a skin over its entire surface. To this end, a first sheet 12 of a non-woven plastics material is laid against the internal surface of the mould cavity 8. In this embodiment the "batted" sheet 12 may have a bi-filament composition of 50% polypropylene, 50% polystyrene filaments, the filaments being 10 denier and 64 mm long. The sheet 12 may have a thickness defined in terms of g/m² of 150 g/m².

The first sheet 12 is positioned in the mould cavity 8 by a positioning member 16 which has a projecting part 18 which engages the sheet 12.

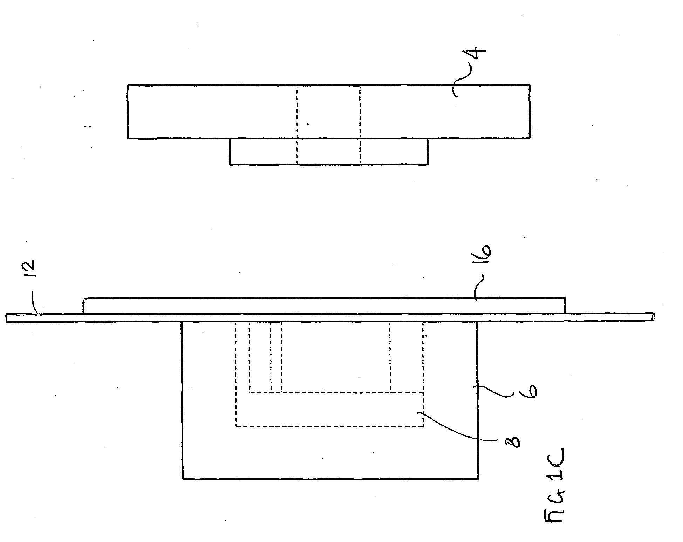

As shown in Figure 1C, the projection 18 of the positioning member is moved into the mould cavity, drawing and possibly stretching the first sheet 12 with it as it goes. The positioning member does not have to fit exactly the form of the cavity. It only needs to create sufficient space behind the sheet 12 to introduce the required amount of partially expanded beads.

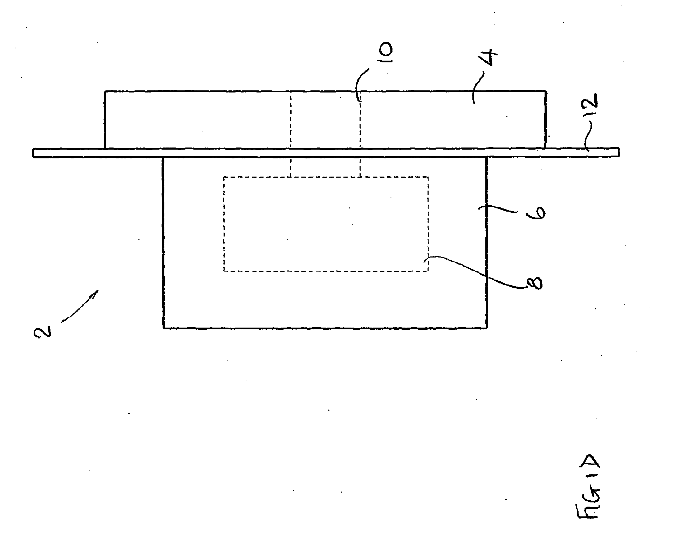

Thereafter, the positioning member 16 is removed from the mould cavity 8 and the mould closed, as shown in Figure 1D. The mould cavity 8 is then filled with e.g. expandable polystyrene or polypropylene beads through the filler opening 10 in the male mould part 4. Steam is then introduced to the mould cavity 8 in the normal manner in order to expand and fuse the material within the mould cavity 8 and also partially to fuse the first sheet 12 to the contacting surfaces of the foamed body being formed in the mould 2. The sheet 12 will be forced into close contact with the walls of the mould cavity during this stage.

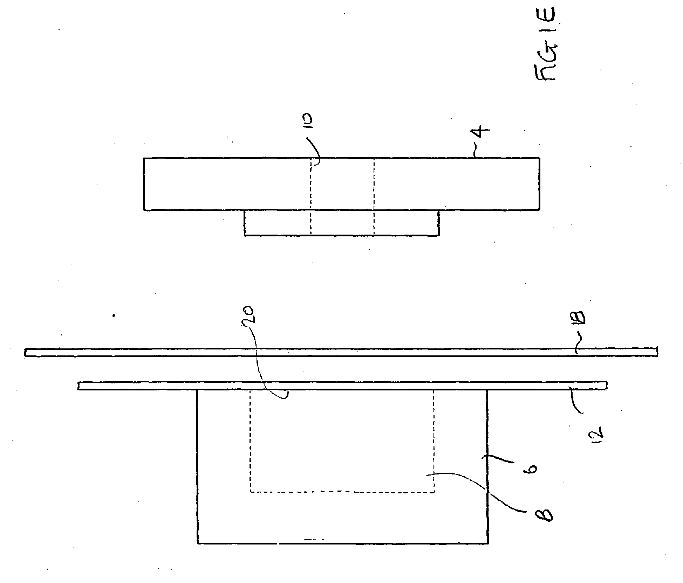

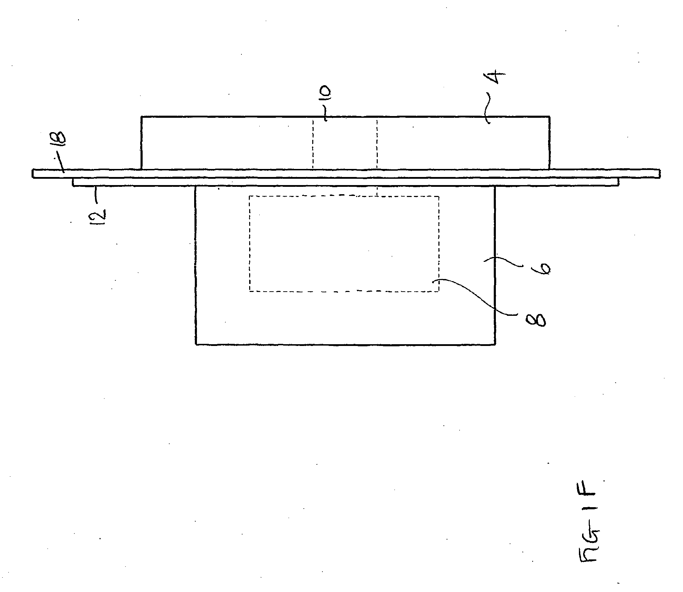

In order to finish the process, the mould tool 2 is opened as shown in Figure 1E and a second sheet 18 of non-woven material (which may be the same or a different material from that of the first sheet 12) is placed across the open end 20 of the mould cavity 8 and the mould then closed once more, as shown in Figure 1F. At this stage further steam is applied to the mould cavity in the normal manner so as to complete the fusion of the foam body, complete the fusion of the first sheet 12 to the foam body and also to fuse the second sheet 18 to the remaining face of the body.

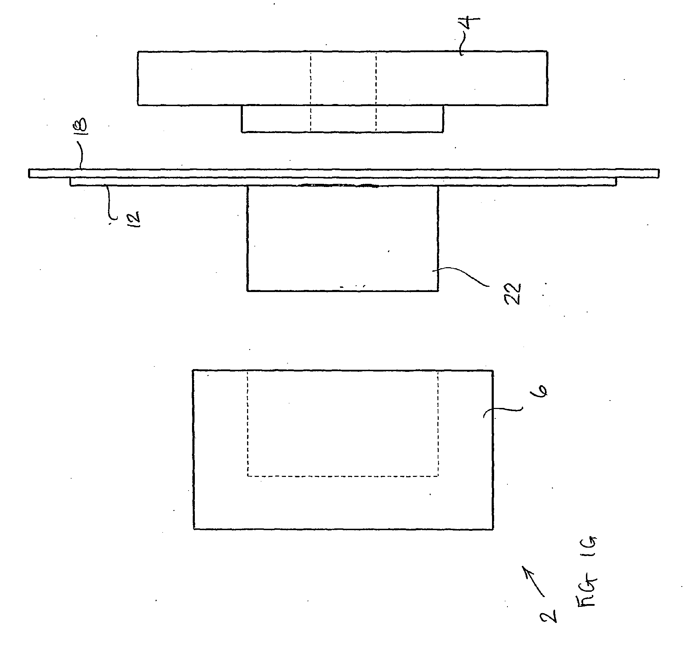

The mould 2 is then opened as shown in Figure 1G to allow removal of the final product 22. At this stage the peripheral portions of the first and second sheets 12 and 18 are still attached to the body 22, but these can be trimmed in any suitable manner.

The precise process parameters can be chosen to give the desired surface finish, but typically steam is supplied to the mould 2 at a pressure between 1 and 4 bar and at temperatures between 100° and 160°C. The process time may typically last between one and six minutes.

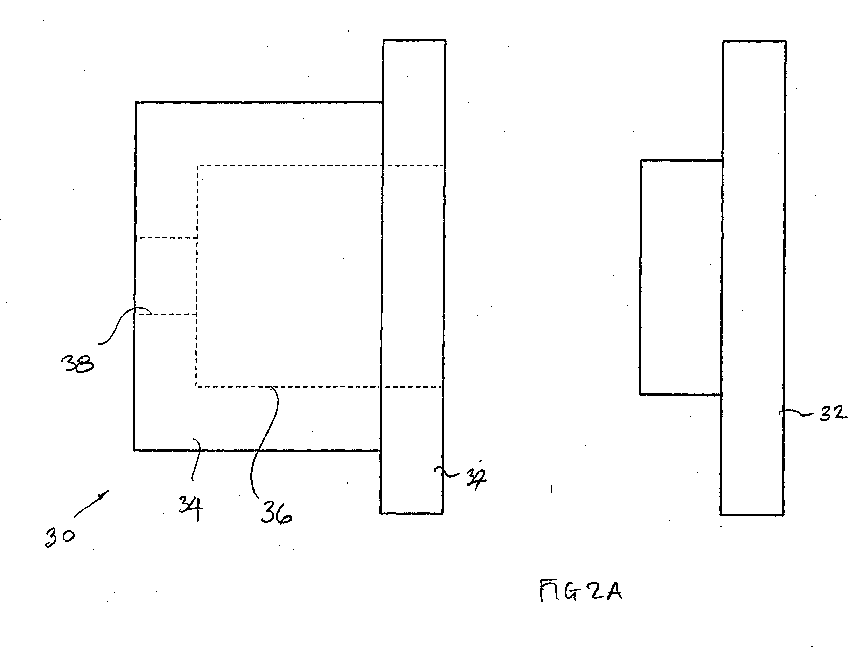

Turning now to Figure 2A to 2G, a second embodiment of the process of the invention is described.

The process is generally similar to that of the first embodiment, but does not use a separate positioning member to position the batting sheet, rather using a partially fused expanded foam body.

As shown in Figure 2A, the mould 30 of this embodiment comprises a male part 32 and a female part 34. The female part 34 defines a mould cavity 36 and further has a filling opening 38 for admitting beads into the mould cavity 36.

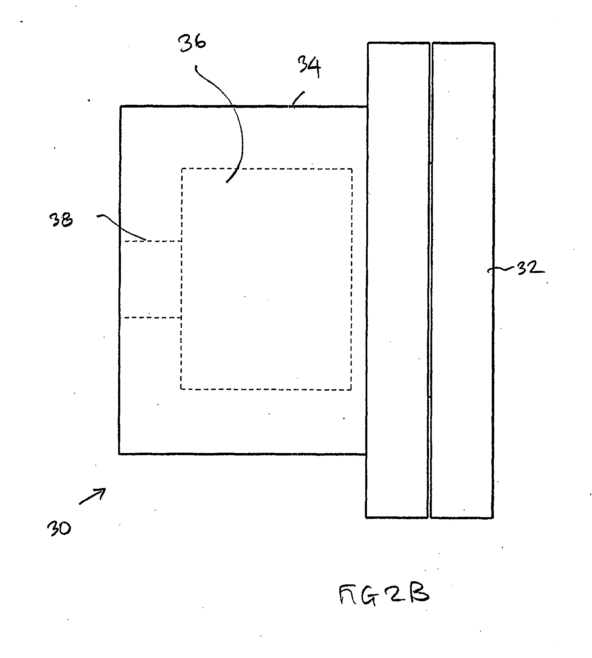

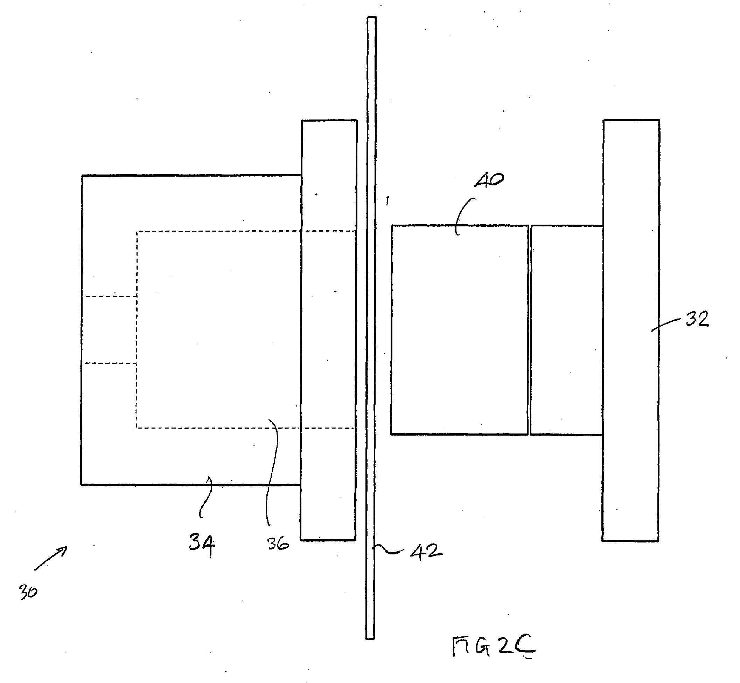

In a first stage of the process shown in Figure 2B, the mould 30 is closed, beads introduced into the mould cavity 36 through the filler opening 38 and the beads expanded and fused into a partially fused body 38 in the normal manner (see Figure 2C). As further shown in Figure 2C, when the mould 30 is then opened, the partially fused body 38 remains attached to the male tool part 32.

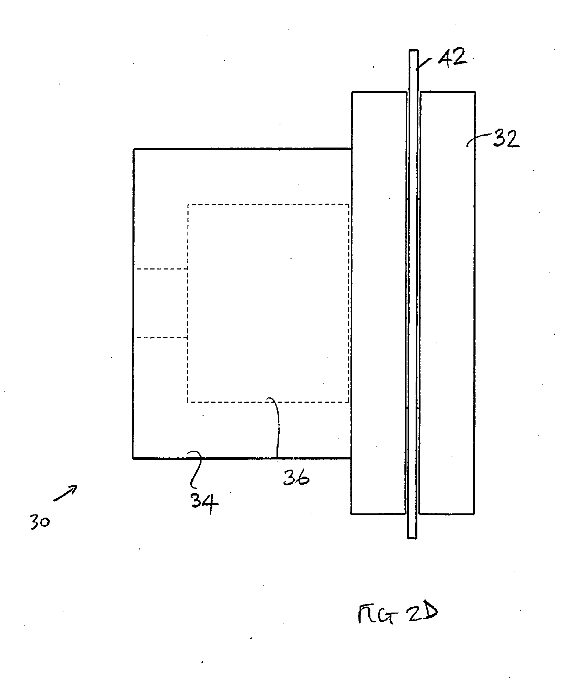

A first sheet of non-woven material 40 is then positioned in front of the partially fused body 38 and the mould 30 then closed once again as shown in Figure 2D. In this embodiment, therefore, the partially fused bead body 38 acts to position the sheet 40 in the mould cavity 38.

Further steam is then admitted into the mould cavity 36 in the normal manner so as partially to fuse the sheet 42 to the surface of the partially fused block 40.

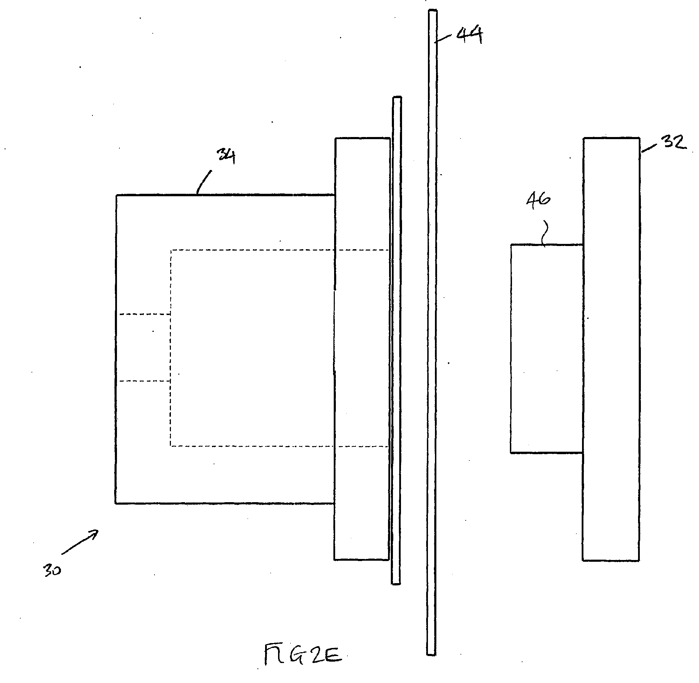

The mould 30 is then opened once more, as shown in Figure 2E, and a second sheet 44 of material positioned over the open mouth of the female mould part 34.

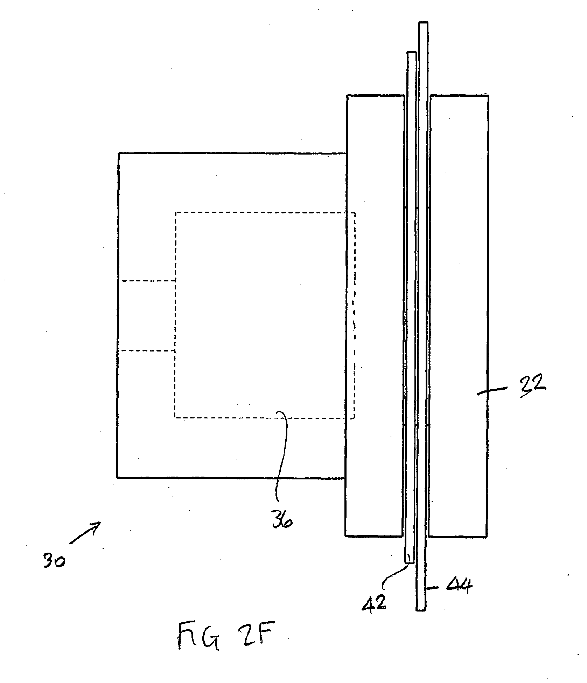

The mould 30 is then closed once more, as shown in Figure 2F. The projecting part 46 of the male tool part 32 acts to position the second sheet 44 in the mouth of the mould cavity 36. Further steam is then admitted to the mould cavity 36 in the normal manner in order to complete the fusion of the foamed beads to one another and to the surface layer forming sheets 42,44.

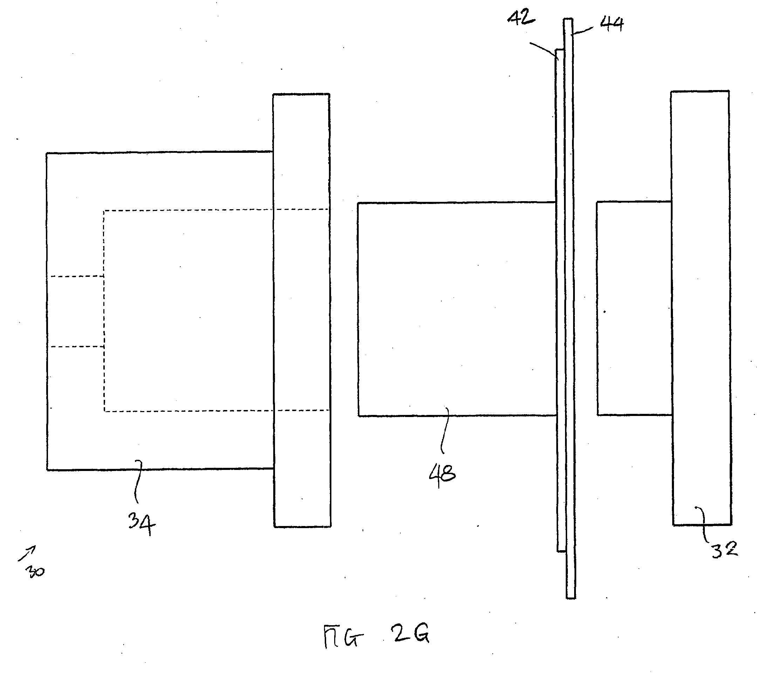

Finally, as shown in Figure 2G, the mould is then opened and the fused and coated body 48 removed. The peripheral portions of the sheets 42 and 44 can be trimmed as necessary.

The system of the present invention provides a very good bond between the surface layer and the foamed substrate due to the porosity of the non-woven sheets which allow the steam which passes through the surfaces of the mould cavity and mould parts to travel into the body of the mould, thereby fusing the beads within the mould and furthermore further acting to fuse the surface layers 42,44 onto the foamed material formed within the mould.

It should be noted that in accordance with the invention the surface layer forming material can be provided in the mould before or after the expandable/partly expanded material. The claims should not, therefore be interpreted to require any particular sequence of events in this respect.

## Claims

1. A method of forming an expanded foam body having a surface layer attached thereto, said process comprising the steps of:
placing a porous, surface layer forming, plastics material in a mould;
introducing an expandable or at least partially expanded plastics material into the mould; and
supplying a fusing medium to the mould such that the fusing medium is able to pass through the porous material;
wherein said surface forming material is provided in the form of a non-woven fibre sheet, **characterized by**, that the pressure, temperature and time of the supply of said fusing medium is controlled such that the surface layer melts entirely so as to fuse onto the expanded foam body forming below.

2. The method of any preceding claim, wherein the sheet comprises 10 denier, 64 millimetre long fibres.

3. The method of any preceding claim, wherein the thickness of the surface layer forming material is 90 g/m² or more.

4. The method of any preceding claim, wherein the porosity of the surface layer forming material is such as to provide a restriction of the flow of the fusing medium into the mould of not more than 30%.

5. The method of any preceding claim, wherein the surface layer forming material comprises polypropylene and/or polystyrene.

6. The method of claim 5, wherein the surface layer forming material comprises approximately 50% polypropylene and 50% polystyrene.

7. The method of any preceding claim, comprising the step of: positioning the surface layer forming material in the mould using a positioning tool which enters the mould.

8. The method of claim 7 comprising the steps of:
filling the mould with expandable material after withdrawal of the positioning tool: and
then introducing fusing medium into the mould.

9. The method of any of claims 1 to 6 comprising the steps of:
forming an at least partially fused and expanded body within the mould;
opening the mould and withdrawing the at least partially fused and expanded body from the mould; and
positioning the surface layer forming material in the mould by the reinsertion of the at least partially fused and expanded body into the mould.

10. The method of any preceding claim, wherein the surface layer is applied in more than one step.

11. The method of claim 10, comprising the steps of:
opening the mould after at least partially fusing the body and a first section of the surface layer forming material together;
positioning a second section of surface layer forming material in the mould;
re-closing the mould; and
completing the fusion process.

## Patentansprüche

1. Verfahren zum Bilden eines Körpers aus aufgeschäumtem Schaumstoff, der eine daran befestigte Oberflächenschicht besitzt, wobei das Verfahren die folgenden Schritte umfasst:
Anordnen eines porösen, eine Oberflächenschicht bildenden Kunststoffmaterials in einer Gießform;
Einleiten eines aufschäumbaren oder wenigstens teilweisen aufgeschäumten Kunststoffmaterials in die Gießform; und
Liefern eines schmelzenden Mediums bzw.
Fusionsmediums in die Gießform, so dass sich das schmelzende Medium durch das poröse Material bewegen kann;
wobei das eine Oberfläche bildende Material in Form einer nicht gewebten Faserlage vorgesehen ist, **dadurch gekennzeichnet, dass** der Druck, die Temperatur und die Zeit der Zufuhr des schmelzenden Mediums in der Weise gesteuert werden, dass die Oberflächenschicht vollständig schmilzt, um auf dem darunter gebildeten Körper aus aufgeschäumtem Schaumstoff zu schmelzen.

2. Verfahren nach einem vorhergehenden Anspruch, wobei die Lage Fasern mit einer Länge von 64 Millimetern und mit 10 Denier enthält.

3. Verfahren nach einem vorhergehenden Anspruch, wobei die Dicke des die Oberflächenschicht bildenden Materials 90 g/m² oder mehr beträgt.

4. Verfahren nach einem vorhergehenden Anspruch, wobei die Porosität des die Oberflächenschicht bildenden Materials derart ist, dass eine Beschränkung des Flusses des schmelzenden Mediums in die Gießform von nicht mehr als 30 % geschaffen wird.

5. Verfahren nach einem vorhergehenden Anspruch, wobei das die Oberflächenschicht bildende Material Polypropylen und/oder Polystyrol enthält.

6. Verfahren nach Anspruch 5, wobei das die Oberflächenschicht bildende Material etwa 50 % Polypropylen und 50 % Polystyrol enthält.

7. Verfahren nach einem vorhergehenden Anspruch, das den Schritt des Positionierens des die Oberflächenschicht bildenden Materials in der Gießform unter Verwendung eines in die Gießform eindringenden Positionierungswerkzeugs umfasst.

8. Verfahren nach Anspruch 7, das die folgenden Schritte umfasst:
Füllen der Gießform mit aufschäumbarem Material nach dem Entnehmen des Positionierungswerkzeugs; und
dann Einleiten des schmelzenden Mediums in die Gießform

9. Verfahren nach einem der Ansprüche 1 bis 6, das die folgenden Schritte umfasst:
Bilden eines wenigstens teilweise geschmolzenen und aufgeschäumten Körpers in der Gießform;
Öffnen der Gießform und Entnehmen des wenigstens teilweise geschmolzenen und aufgeschäumten Körpers aus der Gießform; und
Positionieren des die Oberflächenschicht bildenden Materials in der Gießform durch erneutes Einsetzen des wenigstens teilweise geschmolzenen und aufgeschäumten Körpers in die Gießform.

10. Verfahren nach einem vorhergehenden Anspruch, wobei die Oberflächenschicht in mehr als einem Schritt aufgebracht wird.

11. Verfahren nach Anspruch 10, das die folgenden Schritte umfasst:
Öffnen der Gießform, nachdem der Körper und ein erster Abschnitt des die Oberflächenschicht bildenden Materials wenigstens teilweise zusammengeschmolzen sind;
Positionieren eines zweiten Abschnitts des die Oberflächenschicht bildenden Materials in der Gießform;
erneutes Schließen der Gießform; und
Abschließen des Schmelzprozesses.

## Revendications

1. Procédé pour former un corps en mousse expansée ayant une couche de surface attachée à celui-ci, ledit procédé comprenant les étapes consistant à :
placer une matière plastique formant une couche de surface poreuse dans un moule ;
introduire une matière plastique expansible ou au moins partiellement expansée dans le moule ; et
fournir un milieu en fusion au moule de façon que le milieu de fusion soit capable de traverser le matériau poreux ;
dans lequel ledit matériau de formation de surface est fourni sous la forme d'une feuille en fibres non tissées, **caractérisé en ce que** la pression, la température et le temps de fourniture dudit milieu de fusion sont contrôlés de façon que la couche de surface fonde entièrement de manière à fondre sur le corps en mousse expansée se formant dessous.

2. Procédé selon l'une quelconque des revendications précédentes, dans lequel la feuille comprend des fibres ayant une longueur de 64 millimètres, de 10 deniers.

3. Procédé selon l'une quelconque des revendications précédentes, dans lequel l'épaisseur du matériau formant une couche de surface est de 90 g/m² ou plus.

4. Procédé selon l'une quelconque des revendications précédentes, dans lequel la porosité du matériau formant une couche de surface est telle qu'elle réalise une restriction du flux du milieu en fusion dans le moule ne dépassant pas 30 %.

5. Procédé selon l'une quelconque des revendications précédentes, dans lequel le matériau formant une couche de surface comprend du polypropylène et/ou du polystyrène.

6. Procédé selon la revendication 5, dans lequel le matériau formant une couche de surface comprend approximativement 50 % de polypropylène et 50 % de polystyrène.

7. Procédé selon l'une quelconque des revendications précédentes, comprenant l'étape consistant à positionner le matériau formant une couche de surface dans le moule par utilisation d'un outil de positionnement qui entre dans le moule.

8. Procédé selon la revendication 7, comprenant les étapes consistant à :
remplir le moule avec du matériau expansible après retrait de l'outil de positionnement ; et
ensuite introduire le milieu en fusion dans le moule.

9. Procédé selon l'une quelconque des revendications 1 à 6, comprenant les étapes consistant à :
former un corps au moins partiellement fondu et expansé à l'intérieur du moule ;
ouvrir le moule et retirer le corps au moins partiellement fondu et expansé hors du moule ; et
positionner le matériau formant une couche de surface dans le moule par la réinsertion du corps au moins partiellement fondu et expansé dans le moule.

10. Procédé selon l'une quelconque des revendications précédentes, dans lequel la couche de surface est appliquée en plusieurs étapes.

11. Procédé selon la revendication 10, comprenant les étapes consistant à :
ouvrir le moule après fusion au moins partielle du corps et d'une première section du matériau formant une couche de surface ensemble ;
positionner une deuxième section de matériau formant une couche de surface dans le moule ;
refermer le moule ; et
achever le procédé de fusion.
